(19) Europäisches Patentamt / European Patent Office / Office européen des brevets

(11) **EP 4 733 334 A1**

(12) **EUROPEAN PATENT APPLICATION**
published in accordance with Art. 153(4) EPC

(43) Date of publication:
29.04.2026 Bulletin 2026/18

(21) Application number: 24825825.3

(22) Date of filing: 14.06.2024

(51) International Patent Classification (IPC):
$C08F\ 220/18^{(2006.01)}$   $C08F\ 212/08^{(2006.01)}$
$C08K\ 5/372^{(2006.01)}$   $C08L\ 33/12^{(2006.01)}$

(52) Cooperative Patent Classification (CPC):
C08F 212/08; C08F 220/18; C08K 5/372;
C08L 33/12

(86) International application number:
PCT/JP2024/021635

(87) International publication number:
WO 2024/262422 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.06.2023 JP 2023100539

(71) Applicant: Kuraray Co., Ltd.
Kurashiki-shi, Okayama 710-0801 (JP)

(72) Inventors:
• NOMOTO, Yusaku
  Tainai-shi, Niigata 959-2691 (JP)
• MATSUMURA, Atsushi
  Tainai-shi, Niigata 959-2691 (JP)
• MATSUI, Tomoyuki
  Tainai-shi, Niigata 959-2691 (JP)

(74) Representative: Müller-Boré & Partner
Patentanwälte PartG mbB
Friedenheimer Brücke 21
80639 München (DE)

(54) **METHACRYLIC RESIN AND METHOD FOR PRODUCING SAME, METHACRYLIC RESIN COMPOSITION, AND MOLDED BODY**

(57) The present disclosure provides a methacrylic resin having excellent heat resistance and excellent heat decomposition resistance (thermal stability), excellent mechanical properties such as excellent rigidity and excellent surface hardness, and excellent moldability, and provides a method for manufacturing such a methacrylic resin. A methacrylic resin according to the present disclosure contains a methacrylic copolymer (A) consisting of 40 to 99 mass% of a methyl methacrylate (MMA) unit, 1 to 40 mass% of at least one type of isopropenyl aromatic compound unit (UI), and 0 to 30 mass% of at least one type of other units (UO), wherein a glass transition temperature (Tg) is 120°C or higher, and the methacrylic resin satisfies a formula $(Mw/Mn)_A/(Mw/Mn)_B \leq 1.40$. $(Mw/Mn)_A$ is a molecular weight distribution determined by a GPC analysis using an absorbance detector having a detection wavelength of 254 nm, and $(Mw/Mn)_B$ is a molecular weight distribution (Mw/Mn) determined by a GPC analysis using a differential refractive index detector.

Processed by Luminess, 75001 PARIS (FR)

## Description

### Technical Field

The present disclosure relates to a methacrylic resin, its manufacturing method, a methacrylic resin composition, and a molded article.

### Background Art

Methacrylic resin such as polymethyl methacrylate (PMMA) is excellent in transparency, abrasion resistance, moldability, and the like, and is widely used as materials for: optical members such as light guiding plates and lenses; components for vehicles such as automobiles (such as materials for interiors of vehicles and materials for exteriors of vehicles); and various types of members such as those for buildings, household articles, OA apparatuses, and lighting apparatuses.

Depending on the use, a methacrylic resin is required to have heat resistance and/or rigidity.

For example, materials for interiors of vehicles such as vehicle cover members may be disposed, in view of the design of the interiors of the vehicle, visibility of instruments, and the like, at positions where they are exposed to direct sunlight and hence their temperatures tend to rise, so that they are required to have heat resistance. For materials for exteriors of vehicles such as tail lamps and vehicle lights, it is required to reduce the thickness of walls or the like of resin members in order to reduce the weights of vehicles. However, if the thickness of ordinary methacrylic resins such as PMMA, of which heat resistance and rigidity are not sufficient, they may be distorted under high-temperature environments. Methacrylic resins used in such uses are required to have heat resistance and rigidity.

As one of methacrylic resins having improved heat resistance, a methacrylic copolymer containing a methyl methacrylate (MMA) unit and an isopropenyl aromatic compound unit such as an $\alpha$-methylstyrene ($\alpha$MSt) unit is known. For example, Patent Literature 1 discloses a method for manufacturing a methacrylic copolymer, in which a monomer mixture containing methyl methacrylate (MMA) and $\alpha$-methylstyrene ($\alpha$MSt) is subjected to bulk polymerization by adding, as a polymerization initiator, a polyfunctional organic peroxide having a 10 hour half-life temperature within a range of 60 to 110°C (Claim 1).

Patent Literature 2 discloses a method for manufacturing a methacrylic copolymer, in which a monomer mixture containing methyl methacrylate (MMA) and $\alpha$-methylstyrene ($\alpha$MSt) is subjected to bulk polymerization by adding an organic peroxide, which is used as a polymerization initiator, and divinylbenzene (Claim 1 and paragraph 0022 and the like).

Each of Patent Literatures 3 and 4 discloses a methacrylic copolymer, which contains a methyl methacrylate (MMA) unit and an $\alpha$-methylstyrene ($\alpha$MSt) unit, and of which a relationship between a molecular weight or its logarithm of a peak top obtained by a gel permeation chromatography (GPC) analysis using a differential refractive index detector and a molecular weight or its logarithm of a peak top obtained by a gel permeation chromatography (GPC) analysis using an absorbance detector having a detection wavelength of 254 nm is defined (Claim 1 of Patent Literature 3 and Claim 1 of Patent Literature 4).

In the methacrylic copolymer disclosed in Patent Literature 4, a 1% thermal weight loss temperature when the temperature is raised at a rate of 10°C/min under a nitrogen atmosphere is larger than 260°C (Claim 1).

Each of Patent Literatures 3 and 4 also discloses a method for manufacturing a methacrylic copolymer, in which a polymerization raw material containing a monomer mixture containing methyl methacrylate (MMA) and $\alpha$-methylstyrene ($\alpha$MSt), and a polymerization initiator is subjected to continuous bulk polymerization, and then the remaining monomer mixture is removed (Claim 12 of Patent Literature 3 and Claim 12 of Patent Literature 4).

### Citation List

### Patent Literature

Patent Literature 1: Japanese Unexamined Patent Application Publication No. H4-218515
Patent Literature 2: Japanese Unexamined Patent Application Publication No. H4-328111
Patent Literature 3: International Patent Publication No. WO 2021/117903
Patent Literature 4: International Patent Publication No. WO 2022/196827

### Summary of Invention

## Technical Problem

However, in general, regarding a methacrylic copolymer containing an MMA unit and an isopropenyl aromatic compound unit such as an αMSt unit, it is difficult to control the copolymerization of the isopropenyl aromatic compound. Therefore, in general, it is difficult to stably manufacture a methacrylic copolymer of which the composition such as the content of the isopropenyl aromatic compound unit is uniform. Variations in the composition such as the content of the isopropenyl aromatic compound unit may cause a deterioration in heat resistance and a deterioration in mechanical properties such as rigidity and surface hardness.

Further, a methacrylic copolymer containing an MMA unit and an isopropenyl aromatic compound unit such as an αMSt unit tends to have a relatively low thermal decomposition temperature. Therefore, for a methacrylic resin mainly containing this copolymer, there is a risk that the copolymer thermally decomposes when it is heated and melted such as during the manufacturing of the resin and during the molding process, and the amount of remaining monomers in the resin increases, so that the heat resistance deteriorates. Further, if the residence time in the heated and melted state increases during the manufacturing of the resin and during the molding process, an appearance defect such as foaming may occur due to the thermal decomposition of the methacrylic copolymer.

The present disclosure has been made in view of the above-described circumstances, and an object thereof is to provide a methacrylic resin having excellent heat resistance and excellent heat decomposition resistance (thermal stability), excellent mechanical properties such as excellent rigidity and excellent surface hardness, and excellent moldability, and to provide a method for manufacturing such a methacrylic resin.

## Solution to Problem

The present disclosure provides methacrylic resins, methods for manufacturing such methacrylic resins, methacrylic resin compositions, and molded articles specified in the shown below Items [1] to [14].

[1] A methacrylic resin containing a methacrylic copolymer (A) consisting of 40 to 99 mass% of a methyl methacrylate (MMA) unit, 1 to 40 mass% of at least one type of isopropenyl aromatic compound unit (UI), and 0 to 30 mass% of at least one type of other unit (UO), in which

a glass transition temperature is 120°C or higher, and the methacrylic resin satisfies shown below Formula (1),

$$(Mw/Mn)_A / (Mw/Mn)_B \leq 1.40 \quad \cdot \cdot \cdot \quad (1)$$

(in the above-shown formula, $(Mw/Mn)_A$ is a molecular weight distribution (Mw/Mn) determined by a gel permeation chromatography (GPC) analysis using an absorbance detector having a detection wavelength of 254 nm, and $(Mw/Mn)_B$ is a molecular weight distribution (Mw/Mn) determined by a gel permeation chromatography (GPC) analysis using a differential refractive index detector).

[2] The methacrylic resin described in Item [1], in which a total remaining amount of raw material monomers of the methacrylic copolymer (A) is 0 to 1.00 mass %.

[3] The methacrylic resin described in Item [1] or [2], in which the at least one type of isopropenyl aromatic compound unit (UI) includes an α-methylstyrene unit.

[4] The methacrylic resin described in any one of Items [1] to [3], in which the methacrylic copolymer (A) contains an aromatic vinyl compound unit other than the isopropenyl aromatic compound unit as the other unit (UO).

[5] The methacrylic resin described in any one of Items [1] to [4], further containing 1 to 1,000 ppm of at least one type of organic disulfide compound (D).

[6] The methacrylic resin described in Item [5], in which the at least one type of organic disulfide compound (D) includes di-tert-dodecyl disulfide (DDS) and/or dibenzyl disulfide (DBS).

[7] The methacrylic resin described in any one of Items [1] to [6], in which a flexural modulus of a test piece having a length of 80 mm, a width of 10 mm, and a thickness of 4 mm obtained by molding the methacrylic resin is 3,000 MPa or higher as measured in accordance with JIS K7171.

[8] The methacrylic resin described in any one of Items [1] to [7], in which Rockwell hardness of a square-shaped test piece having a length 50 mm on each side and a thickness of 3 mm obtained by molding the methacrylic resin is 85 or higher as measured under the condition of M scale according to JIS K7202-2.

[9] A methacrylic resin composition containing a methacrylic resin described in any one of Items [1] to [8].

[10] A molded article containing a methacrylic resin described in any one of Items [1] to [8] or the methacrylic resin composition described in Item [9].

[11] A method for manufacturing a methacrylic resin described in any one of Items [1] to [8], including:

a step (S1) of preparing a polymerization raw material containing 30 to 99 mass% of methyl methacrylate (MMA), 1 to 59 mass% of at least one type of isopropenyl aromatic compound (I), and 0 to 49 mass% of at least one type of other monomers (O) as raw material monomers, and further containing a polymerization initiator;

a step (S2) of polymerizing the polymerization raw material under a condition that a polymerization conversion rate is 30 to 60 mass%, and thereby obtaining a resin solution containing the methacrylic resin; and

a step (S3) of obtaining the methacrylic resin by volatilizing and removing at least a part of the raw material monomers present in the resin solution in one step or over a plurality of steps, in which

10 to 2,000 ppm of at least one type of organic disulfide compound (D) is added to at least one of the polymerization raw material, the resin solution obtained after completion of the step (S2), and the resin solution for which the step (S3) is being performed.

[12] The method for manufacturing the methacrylic resin described in Item [11], in which at least one type of organic disulfide compound (D) is added to at least the polymerization raw material among the polymerization raw material, the resin solution obtained after completion of the step (S2), and the resin solution for which the step (S3) is being performed.

[13] The method for manufacturing the methacrylic resin described in Item [11] or [12], in which the step (S3) includes a step of heating the resin solution to 190 to 250°C and thereby volatilizing raw material monomers present in the resin solution.

[14] The method for manufacturing the methacrylic resin described in any one of Items [11] to [13], in which

the step (S3) includes a step of charging the resin solution into an extruder including at least one vent, volatilizing raw material monomers present in the resin solution and thereby discharging the raw material monomers through the vent, and extruding the methacrylic resin from a die of the extruder, and

a temperature of a molten resin inside the die is 230 to 260°C.

## Advantageous Effects of Invention

According to the present disclosure, it is possible to provide a methacrylic resin having excellent heat resistance and excellent heat decomposition resistance (thermal stability), excellent mechanical properties such as excellent rigidity and excellent surface hardness, and excellent moldability, and to provide a method for manufacturing such a methacrylic resin.

## Description of Embodiments

In this specification, unless otherwise specified, a "unit" contained in a polymer is a repetitive unit contained in the polymer, and is a monomer unit derived from a raw material monomer or a derived unit derived from at least one type of monomer unit.

In this specification, (meth)acryl is a generic term for acryl and methacryl, and the same applies to (meth) acrylonitrile and the like.

[Methacrylic Resin]

A methacrylic resin according to the present disclosure contains a methacrylic copolymer (A) consisting of 40 to 99 mass% of a methyl methacrylate (MMA) unit, 1 to 40 mass% of at least one type of isopropenyl aromatic compound unit (UI), and 0 to 30 mass% of at least one type of other units (UO).

The content of the methacrylic copolymer (A) in the methacrylic resin according to the present disclosure is not limited to any particular values, and is preferably 97.0 mass% or more. The lower limit value is more preferably 97.5 mass%, still more preferably 98.0 mass%, particularly preferably 98.5 mass%, and most preferably 99.0 mass%. The upper limit value is 99.9999 mass%.

The methacrylic resin according to the present disclosure may further contain at least one type of optional component as required.

(Methacrylic Copolymer (A))

The content of the methyl methacrylate (MMA) unit in the methacrylic copolymer (A) is 40 to 99 mass%. The lower limit value is preferably 45 mass%, more preferably 50 mass%, still more preferably 55 mass%, still more preferably 60 mass%, still more preferably 65 mass%, particularly preferably 70 mass%, and most preferably 75 mass%. The upper limit value is preferably 95 mass%, more preferably 90 mass%, and particularly preferably 85 mass%.

The content of the at least one type of isopropenyl aromatic compound unit (UI) (the total amount in the case of a plurality of types, unless otherwise specified) in the methacrylic copolymer (A) is 1 to 40 mass%. The lower limit value is preferably 5 mass%, more preferably 10 mass%, and particularly preferably 15 mass%. The upper limit value is preferably 35 mass%, more preferably 30 mass%, particularly preferably 25 mass%, and most preferably 20 mass%.

The content of the at least one type of other units (UO) (the total amount in the case of a plurality of types, unless otherwise specified) in the methacrylic copolymer (A) is 0 to 30 mass%. The upper limit value is preferably 25 mass%, more preferably 20 mass%, still more preferably 15 mass%, particularly preferably 10 mass%, and most preferably 5 mass%.

Note that the sum total of the content of the MMA unit, the content of the at least one type of isopropenyl aromatic compound unit (UI), and the content of the at least one type of other units (UO) in the methacrylic copolymer (A) is 100 mass%.

When the content of the isopropenyl aromatic compound unit (UI) is less than the aforementioned lower limit value, the heat resistance of the methacrylic copolymer (A) may be insufficient. When the content of the isopropenyl aromatic compound units (UI) exceeds the aforementioned upper limit value, the polymerization property (productivity), the heat decomposition resistance, and the moldability of the methacrylic copolymer (A) may deteriorate. When the content of the isopropenyl aromatic compound unit (UI) exceeds the aforementioned upper limit value, the control of the copolymerization of the isopropenyl aromatic compound (I) becomes difficult, so that it may become difficult to stably manufacture a methacrylic copolymer (A) of which the composition such as the content of the isopropenyl aromatic compound unit (UI) is uniform. Variations in the composition such as the content of the isopropenyl aromatic compound unit (UI) may cause a deterioration in heat resistance and a deterioration in mechanical properties such as rigidity and surface hardness.

When the content of the MMA unit and the content of the isopropenyl aromatic compound unit (UI) are within the above-described respective ranges, the methacrylic copolymer (A) can have excellent transparency, excellent heat resistance, excellent heat decomposition resistance, an excellent polymerization property (productivity), and excellent moldability. Further, when the content of the MMA unit and the content of the isopropenyl aromatic compound unit (UI) are within the above-described respective ranges, it is possible to easily control the copolymerization of the isopropenyl aromatic compound (I) of the methacrylic copolymer (A), stably manufacture a methacrylic copolymer (A) of which the composition such as the content of the isopropenyl aromatic compound unit (UI) is uniform, and stably manufacture a methacrylic copolymer (A) having excellent heat resistance and excellent mechanical properties such as excellent rigidity and excellent surface hardness.

The methacrylic copolymer (A) is obtained by copolymerizing methyl methacrylate (MMA), at least one type of isopropenyl aromatic compound (I) and, when necessary, at least one type of other monomers (O).

Examples of isopropenyl aromatic compounds (I) include alkyl-substituted isopropenylbenzenes such as isopropenylbenzene ($\alpha$-methylstyrene ($\alpha$MSt)), isopropenylnaphthalene, isopropenyltoluene, isopropenylethylbenzene, isopropenylpropylbenzene, isopropenylbutylbenzene, isopropenylpentylbenzene, isopropenylhexylbenzene, and isopropenyloctylbenzene.

In view of the availability of raw materials and the like, the at least one type of isopropenyl aromatic compound (I) preferably contains at least one type of alkyl-substituted isopropenylbenzene, and particularly preferably contains isopropenylbenzene ($\alpha$-methylstyrene ($\alpha$MSt)).

Examples of other monomers (O) include vinyl-based monomers (V) having one polymerizable unsaturated bond in one molecule other than the methyl methacrylate (MMA) and the isopropenyl aromatic compound (I).

Examples of vinyl-based monomers (V) include (meth)acrylic acid esters other than the MMA such as methyl acrylate; (meth)acrylic acid alkyl esters such as ethyl (meth)acrylate, propyl (meth)acrylate, butyl (meth)acrylate, and 2-ethyl hexyl (meth)acrylate; (meth)acrylic acid aryl esters such as phenyl (meth)acrylate; and (meth)acrylic acid cycloalkyl esters such as cyclohexyl (meth)acrylate and norbornenyl (meth)acrylate.

Other examples of vinyl-based monomers (V) include (meth)acrylic acid, (meth)acrylamide, and (meth)allylonitrile.

Other examples of vinyl-based monomers (V) include aromatic vinyl compounds other than the isopropenyl aromatic compound (I) such as styrene (St); alkyl-substituted styrenes such as o-, m-, or p-methylstyrene, 2,4-dimethylstyrene, 2,5-dimethylstyrene, 3,4-dimethylstyrene, 3,5-dimethylstyrene, o-, m-, or p-ethylstyrene; and 1,1-diphenylethylene.

The methacrylic copolymer (A) may contain, as other units (UO), for example, an aromatic vinyl compound unit other than the isopropenyl aromatic compound unit (UI) (e.g., a styrene (St) unit or the like).

The methacrylic copolymer (A) may contain at least one type of ring structural unit (UR) as the at least one type of other units (UO).

Examples of other monomers (O) with which a ring structure can be introduced into the main chain by a radical polymerization reaction include acid anhydrides such as maleic anhydride (Mah) and itaconic anhydride; N-alkylmaleimides such as N-methylmaleimide, N-ethylmaleimide, N-butylmaleimide, and N-cyclohexylmaleimide (ChMI); N-arylmaleimides such as N-phenylmaleimide, N-methylphenylmaleimide, and N-chlorphenylmaleimide; and cycloolefins such as norbornene, ethylidenennorbornene, dicyclopentadiene, and tetracyclododecene. Among them, maleic anhydride (Mah), N-cyclohexylmaleimide (ChMI), and N-phenylmaleimide are preferred.

The content of the ring structural unit (UR) (the total amount in the case of a plurality of types, unless otherwise specified) in the methacrylic copolymer (A) is 0 to 30 mass%. The upper limit value is preferably 25 mass%, more preferably 20 mass%, still more preferably 15 mass%, particularly preferably 10 mass%, and most preferably 5 mass%.

(Organic Disulfide Compound (D))

The methacrylic resin according to the present disclosure may contain at least one type of organic disulfide compound (D) as an additive(s). The content of the at least one type of organic disulfide compound (D) (the total amount in the case of a plurality of types, unless otherwise specified) in the methacrylic resin according to the present disclosure is preferably from 1 to 1000 ppm. The lower limit value is preferably 10 ppm, more preferably 50 ppm, still more preferably 80 ppm, still more preferably 100 ppm, still more preferably 150 ppm, particularly preferably 200 ppm, and most preferably 250ppm. The upper limit value is preferably 800 ppm, more preferably 750 ppm, still more preferably 700 ppm, still more preferably 650 ppm, still more preferably 600 ppm, particularly preferably 550 ppm, and most preferably 500ppm.

As described in the [Technical Problem] section, in general, a methacrylic copolymer containing an MMA unit and an isopropenyl aromatic compound unit (UI) such as an αMSt unit tends to have a relatively low thermal decomposition temperature. Therefore, for a methacrylic resin mainly containing this copolymer, there is a risk that the copolymer thermally decomposes when it is heated and melted such as during the manufacturing of the resin and during the molding process, and the amount of remaining monomers in the resin increases, so that the heat resistance deteriorates. Further, if the residence time in the heated and melted state increases during the manufacturing of the resin and during the molding process, an appearance defect such as foaming may occur due to the thermal decomposition of the methacrylic copolymer.

In the methacrylic resin containing an appropriate amount of the organic disulfide compound (D) according to the present disclosure, the thermal decomposition of the methacrylic copolymer (A) is effectively suppressed by the presence of the appropriate amount of the organic disulfide compound (D) during the manufacturing of the resin. As a result, it is possible to stably manufacture a methacrylic resin of which the amount of remaining monomers is small and which has excellent heat resistance and excellent heat decomposition resistance (thermal stability).

Further, owing to the presence of the appropriate amount of the organic disulfide compound (D), it is possible to, during the manufacturing of the resin, relatively easily control the copolymerization of the isopropenyl aromatic compound (I), stably manufacture a methacrylic copolymer (A) of which the composition such as the content of the isopropenyl aromatic compound unit (UI) is uniform, and stably manufacture a methacrylic copolymer (A) having excellent heat resistance and excellent mechanical properties such as excellent rigidity and excellent surface hardness.

A methacrylic resin containing an appropriate amount of the organic disulfide compound (D) according to the present disclosure is excellent in heat resistance and heat decomposition resistance (thermal stability) because the presence of the appropriate amount of the organic disulfide compound (D) effectively suppresses the thermal decomposition of the methacrylic copolymer (A) even when the resin is heated and melted, such as during the molding process after the manufacturing of the resin.

In the methacrylic resin containing an appropriate amount of the organic disulfide compound (D) according to the present disclosure, an appearance defect such as foaming due to the thermal decomposition of the methacrylic copolymer (A) is suppressed even when the residence time in the heated and melted state increases during the manufacturing of the resin and during the molding process or the like.

When the content of the organic disulfide compound (D) in the methacrylic resin according to the present disclosure is equal to or less than the upper limit value, discoloration such as yellowing, a unpleasant odor, and the like during the manufacturing of the resin and during the molding process or the like can be suppressed.

For the above-described reasons, the methacrylic resin according to the present disclosure, a methacrylic resin composition containing the methacrylic resin according to the present disclosure, and a molded article containing the methacrylic resin according to the present disclosure can be excellent in heat resistance, heat decomposition resistance (thermal stability), mechanical properties such as rigidity and surface hardness, moldability, appearance, and the like

Note that the above-described effects during the manufacturing of the resin can be obtained by adding an appropriate amount of at least one type of organic disulfide compound (D) to the polymerization raw material and/or the intermediate product. Therefore, the content of the at least one type of organic disulfide compound (D) in the finally-obtained methacrylic resin according to the present disclosure may be less than 1 ppm or may be 0 ppm. Even when the content of the at least one type of organic disulfide compound (D) in the finally-obtained methacrylic resin according to the present disclosure is less than 1 ppm, the amount of remaining monomers in the resin is reduced. Therefore, the methacrylic resin according to the present disclosure, of which the composition such as the content of the isopropenyl aromatic compound unit (UI) of the methacrylic copolymer (A) is uniform, can be excellent in heat resistance, heat decomposition resistance, mechanical properties such as rigidity and surface hardness, and the like.

It is known that, in general, an isopropenyl aromatic compound such as αMSt has a low ceiling temperature, which is a temperature at which the polymerization reaction rate becomes equal to the depolymerization reaction rate. For example, the ceiling temperature of αMSt is 61 °C. In general, a copolymer containing a monomer unit containing a methyl group at an α-position of an MMA unit or the like, and an isopropenyl aromatic compound unit can suppress the isopropenyl aromatic compound chain in which repetitive units of an isopropenyl aromatic compound are connected side by side by performing the polymerization at a temperature higher than the ceiling temperature of the isopropenyl aromatic compound. However, it still tends to contain this chain in a certain amount. Because depolymerization-type decomposition which starts from this isopropenyl aromatic compound chain occurs when it is heated and melted such as during the manufacturing of the resin and during the molding process, the methacrylic copolymer containing an MMA unit and an isopropenyl aromatic compound unit (UI) such as an αMSt unit tends to have a relatively low thermal decomposition temperature. It is inferred that when an appropriate amount of the organic disulfide compound (D) is present when it is heated and melted such as during the manufacturing of the resin and during the molding process, thiyl radicals generated by the disconnection of the disulfide bond stabilizes alkyl radicals generated by the depolymerization, which starts from the isopropenyl aromatic compound chain, so that the heat decomposition resistance is remarkably improved.

Examples of organic disulfide compounds (D) include dialkyl disulfide compounds such as diethyl disulfide, di-n-propyl disulfide, di-n-butyl disulfide, di-sec-butyl disulfide, di-tert-butyl disulfide, din-amyl disulfide, di-tert-amyl disulfide, di-tert-hexyl disulfide, di-n-octyl disulfide, di-tert-octyl disulfide, di-n-dodecyl disulfide, di-tert-dodecyl disulfide (DDS), di-n-stearine disulfide, ethyl-n-propyl disulfide, ethyl-tert-butyl disulfide, ethyl-sec-butyl disulfide, and n-propyl-isopropyl disulfide; aromatic disulfide compounds such as diphenyl disulfide, dibenzyl disulfide (DBS), and di-p-tolyl disulfide; cyclic disulfide compounds such as ditrimethylene disulfide, ditetramethylene disulfide, and dicyclohexyl disulfide; amino groupcontaining disulfide compounds such as cystine and diaminodiphenyl disulfide; disulfides of carboxylic acids or their derivatives such as dithiodicrycholic acid, dithiodipropionic acid, and dithiodicrychol acid-2-ethylhexyl; and disulfide compounds containing an unsaturated bond such as diallyl disulfide. Among them, dialkyl disulfide compounds and/or aromatic disulfide compounds are preferred. In view of the disconnection temperature of the disulfide bond, di-tert-alkyl disulfides such as di-tert-dodecyl disulfide (DDS) are preferred as the dialkyl disulfide compound. Dibenzyl disulfide (DBS) and the like is preferred as the aromatic disulfide compound.

The timing at which the organic disulfide compound (D) is added is not limited to any particular time, and may be before, during, or after the polymerization of the methacrylic copolymer (A).

(Organophosphorus Compound (P))

The methacrylic resin according to the present disclosure can contain at least one type of organophosphorus compound (P) as an additive(s). It is considered that the organophosphorus compound (P) can effectively suppress thermal discoloration caused by the decomposed substances of the organic disulfide compound remaining in the methacrylic copolymer (A).

The organophosphorus compound (P) can be a compound containing at least one type of phosphorus atom-containing organic group (e.g., an organic group containing a P-C bond and/or a P-O-C bond). Specific examples include organophosphorus compounds containing trivalent phosphorus such as phosphite esters (also referred to as phosphites), phosphonites, and hydrolysis products thereof; organophosphorus compounds containing pentavalent phosphorus such as phosphoric esters (also referred to as phosphates), oxidation products of the aforementioned phosphite esters, and oxidation products of the aforementioned phosphonites; and combinations of these compounds and the like. As the phosphites, phosphonites, and phosphates, relatively bulky compounds having an aromatic ring are preferred. For example, compounds having an aryl substituent and a pentaerythritol structure are preferred.

Examples phosphite esters (phosphites) include monoesters, diesters, or triesters of phosphorous acid (e.g., phenyl phosphite, diphenyl phosphite, triphenyl phosphite, and the like), tris(2,4-di-t-butylphenyl) phosphite, tris(2,6-di-t-butylphenyl) phosphite, tris(2,4-di-t-butyl-5 methylphenyl) phosphite, bis(2,4-di-t-butyl-6-methylphenyl) ethylphosphite, 2,2'-methylenebis(4,6-di-t-butylphenyl) octylphosphite, bis(2,6-di-t-butyl-4-methylphenyl) pentaeristol diphosphite, (6-[3-(3-t-butyl-4-hydroxy-5-methylphenyl) propoxy]-2,4,8,10-tetra-t-butyldibenz [d, f][1,3,2] dioxaphosphepine, cyclic neopentanetetryl bis(2,6-di-t-butyl-4 methylphenyl) phosphite, and hydrolysis products of these phosphite esters.

Phosphites may be those commercially available as phosphorus-based antioxidants. Specific examples include tris(2,4-di-t-butylphenyl) phosphite (such as "Irgafos 168" manufactured by BASF), tris[2-[[2,4, 8,10-tetra-t-butyldibenzo [d,f][1,3,2] dioxaphosphepine-6-yl] oxy] ethyl] amine (such as "Irgafos 12" manufactured by BASF), bis(2,4-di-tert-butyl-6 methylphenyl) ethylphosphite (such as "Irgafos 38" manufactured by BASF), 2,2'-methylenebis(4,6-di-tert-butylphenyl) octylphosphite (such as "ADK STB HP-10" manufactured by ADEKA), cyclic neopentanetetrylbis(2,4-di-tert-butylphenyl) phosphite (such as "ADK STB PEP24G" manufactured by ADEKA), bis(2,6-di-t-butyl-4-methylphenyl) pentaerythritol diphosphite (such as "ADK STB PEP36" manufactured by ADEKA), bis(2,6-di-t-butyl-4-methylphenyl) pentaerythritol diphosphite (such as "ADK STB PEP36A" manufactured by ADEKA), cyclic neopentanetetryl bis(2,4-di-tert-butyl phenylphosphite (such as "ADK STB PEP-8" manufactured by ADEKA), and 6-[3-(3-t-butyl-4-hydroxy-5 methylphenyl) propoxy]-2,4,8,10-tetra-t-butyl dibenz [d,f][1,3,2] dioxaphosphepine (such as "Smilizer GP" manufactured by Sumitomo Chemical Co., Ltd.).

Examples of phosphonites include tetrakis (2,4-di-tert-butylphenyl) 4,4'-biphenylenediphosphonite, tetrakis (2,4-di-tert-butyl-5 methylphenyl) 4,4'-biphenylenediphosphonite, and hydrolysis products of these phosphonites.

The phosphonites may be those commercially available as phosphorus-based antioxidants. Specific examples include tetrakis (2,4-di-tert-butylphenyl) 4,4'-biphenylenediphosphonite (such as "HostanoxP-EPQ" manufactured by Clariant AG) and tetrakis (2,4-di-t-butyl-5 methylphenyl) 4,4'-biphenylenediphosphonite (such as "GSY P101" manufactured by Sakai Chemical Industry Co., Ltd.).

Examples of phosphoric esters (phosphates) include 2-ethylhexyl acid phosphate, isodecyl acid phosphate, oleyl acid phosphate, bis(2-ethylhexyl) hydrogenphosphate, ethylene bis(diphenyl phosphate), propylene bis(diphenyl phosphate), phenylene bis(diphenyl phosphate), naphthylene bis(ditruyl phosphate), bisphenol A bis(diphenyl phosphate), 3,5-di-t-butyl-4-hydroxybenzyl phosphate diethyl ester, and hydrolysis products thereof.

The content of the organophosphorus compound (P) (the total amount in the case of a plurality of types, unless otherwise specified) in the methacrylic resin according to the present disclosure is not limited to any particular values, and is preferably from 0.0001 mass% (1 ppm) to 1.0 mass% in view of heat decomposition resistance (thermal stability) and in order to suppress discoloration during the heating and melting. The lower limit value is more preferably 5 ppm, still more preferably 10 ppm, still more preferably 20 ppm, still more preferably 50 ppm, particularly preferably 80 ppm, and most preferably 100 ppm. The upper limit value is more preferably 0.5 mass%, particularly preferably 0.2 mass%, and most preferably 0.1 mass%.

When the content of the organophosphorus compound (P) is too small, the effect of the addition of the organophosphorus compound (P) for suppressing discoloration during the heating and melting may not be effectively obtained. When the content of the organophosphorus compound (P) is too large, the organophosphorus compound (P) may suppress the effect of the organic disulfide compound (D) for improving heat decomposition resistance (thermal stability). Further, the organophosphorus compound (P) may bleed out during the molding process of the methacrylic resin according to the present disclosure.

The timing at which the organophosphorus compound (P) is added is not limited to any particular time, and may be before, during, or after the polymerization of the methacrylic copolymer (A).

In the methacrylic resin according to the present disclosure, the molar ratio of the organophosphorus compound (P) to the organic disulfide compound (D) (the molar ratio of the organophosphorus compound (P) to the organic disulfide compound (D)) is not limited to any particular values, and is preferably 0.01 to 100 in order to effectively improve heat decomposition resistance (thermal stability) and suppress the discoloration during the heating and melting. The lower limit value of this molar ratio is more preferably 0.05, particularly preferably 0.1, and most preferably 1.0. The upper limit value of this molar ratio is more preferably 50, and particularly preferably 10.

(Lubricant (L))

The methacrylic resin according to the present disclosure may contain, when necessary, at least one type of lubricant (L) as an additive(s). The methacrylic resin according to the present disclosure containing at least one type of lubricant (L) can improve mold releasability in the molding process.

Examples of lubricants (L) include stearic acid, behenic acid, stearoamic acid, and methylene bisstearoamide; waxes such as paraffin wax and ketone wax; aliphatic alcohols (preferably alcohols containing 8 to 30 carbon atoms) such as octyl alcohol, cetyl alcohol, and stearyl alcohol; hydrogenated oil; glycerin fatty acid esters (preferably glycerin carboxylic acid containing 8 to 30 carbon atoms esters ) such as triglyceride hydroxystearate, monoglyceride stearate, and diglyceride stearate. As the lubricant (L), aliphatic alcohol and glycerin fatty acid monoester can be used together. In this case, the mass ratio of aliphatic alcohol to glycerin fatty acid monoester is preferably 2.5/1 to 3.5/1, and more preferably 2.8/1 to 3.2/1.

The content of the lubricant (L) (the total amount in the case of a plurality of types, unless otherwise specified) in the methacrylic resin according to the present disclosure is not limited to any particular values, and is preferably 1,000 to 5,000 ppm. The upper limit value is more preferably 4,500 ppm, particularly preferably 4,000 ppm, and most preferably 3,500 ppm.

The timing at which the lubricant (L) is added is not limited to any particular time, and may be before, during, or after the polymerization of the methacrylic copolymer (A).

(Other Additives Other Than Those Described Above)

The methacrylic resin according to the present disclosure may contain, when necessary, at least one type of other additives other than the organic disulfide compound (D), the organophosphorus compound (P), and the lubricant (L).

Examples of other additives include crosslinked polymer particles, impact resistance agents, processing aids, light stabilizers, light diffusers, ultraviolet absorbers, colorants (such as organic dyes, inorganic dyes, and pigments), antioxidants other than phosphorus-based ones, antistatic agents, plasticizers, surfactants, foaming agents, antifoaming agents, and fillers.

The content of the other additives other than the organic disulfide compound (D), the organophosphorus compound (P), and the lubricant (L) (the total amount in the case of a plurality of types, unless otherwise specified) in the methacrylic resin according to the present disclosure is preferably 0 to 0.5 mass%. The upper limit value is more preferably 0.2 mass%. When the content of additives is too large, an appearance defect such as silver may occur in the molded article.

The timing at which the other additive is added is not limited to any particular timings, and may be before, during, or after the polymerization of the methacrylic copolymer (A).

(Total Remaining Amount of Raw Material Monomer)

In the methacrylic resin according to the present disclosure, at least a part of at least one type of raw material monomers (specifically, the methyl methacrylate (MMA), the at least one type of isopropenyl aromatic compound (I), and the at least one type of optional other monomers (O)) of the methacrylic copolymer (A) may remain unreacted.

As described above, in the method for manufacturing a methacrylic resin according to the present disclosure, at least one type of organic disulfide compound (D) can be added to the polymerization raw material and/or the intermediate product. According to this method, the thermal decomposition of the methacrylic copolymer (A) during the manufacturing of the resin is effectively suppressed, and the amount of remaining monomers in the resin is effectively reduced. As a result, the deterioration of the heat resistance of the methacrylic resin due to the presence of the remaining monomers can be effectively suppressed. Since the thermal decomposition of the methacrylic copolymer (A) can be effectively suppressed by using a small amount of the organic disulfide compound (D), the discoloration such as yellowing of the methacrylic resin, which would otherwise be caused by the addition of the organic disulfide compound (D), can be suppressed.

The total remaining amount of raw material monomers of the methacrylic copolymer (A) of the methacrylic resin according to the present disclosure can be 0 to 1.00 mass%. The upper limit value of the total remaining amount of the raw material monomers is preferably 0.80 mass%, more preferably 0.75 mass%, still more preferably 0.70 mass%, still more preferably 0.65 mass%, still more preferably 0.60 mass%, particularly preferably 0.55 mass%, and most preferably 0.50 mass%.

The amount of methyl methacrylate (MMA) remaining in the methacrylic resin according to the present disclosure is 0 to 1.00 mass%. The upper limit value is preferably 0.80 mass%, more preferably 0.70 mass%, still more preferably 0.60 mass%, still more preferably 0.50 mass%, still more preferably 0.40 mass%, still more preferably 0.30 mass%, particularly preferably 0.20 mass%, and most preferably 0.10 mass%.

The content of the isopropenyl aromatic compound (I) remaining in the methacrylic resin according to the present disclosure (the total amount in the case of a plurality of types) is 0 to 1.00 mass%. The upper limit value is preferably 0.80 mass%, more preferably 0.70 mass%, still more preferably 0.60 mass%, still more preferably 0.50 mass%, still more preferably 0.40 mass%, particularly preferably 0.30 mass%, and most preferably 0.20 mass%.

The content of the other monomers (O) remaining in the methacrylic resin according to the present disclosure (the total amount in the case of a plurality of types) is 0 to 1.00 mass%. The upper limit value is preferably 0.80 mass%, more preferably 0.70 mass%, still more preferably 0.60 mass%, still more preferably 0.50 mass%, still more preferably 0.40 mass%, still more preferably 0.30 mass%, particularly preferably 0.20 mass%, and most preferably 0.10 mass%.

In this specification, "weight-average molecular weight $(Mw_A)$" is a weight-average molecular weight (Mw) determined by a gel permeation chromatography (GPC) analysis using an absorbance detector having a detection wavelength of 254 nm. "Number-average molecular weight $(Mn_A)$" is a number-average molecular weight (Mw) determined by a gel permeation chromatography (GPC) analysis using an absorbance detector having a detection wavelength of 254 nm. $(Mw/Mn)_A$ is a molecular weight distribution (Mw/Mn) determined by a gel permeation chromatography (GPC) analysis using an absorbance detector having a detection wavelength of 254 nm.

In this specification, "weight-average molecular weight $(Mw_B)$" is a weight-average molecular weight (Mw) determined by a gel permeation chromatography (GPC) analysis using a differential refractive index detector. "Number-average molecular weight $(Mn_B)$" is a number-average molecular weight (Mw) determined by a gel permeation chromatography (GPC) analysis using a differential refractive index detector. $(Mw/Mn)_B$ is a molecular weight distribution (Mw/Mn) determined by a gel permeation chromatography (GPC) analysis using a differential refractive index detector.

In this specification, unless otherwise specified, "weight-average molecular weight (Mw)" is a weight-average molecular weight in terms of standard polymethyl methacrylate (PMMA). Similarly, "number-average molecular weight (Mn)" is a number-average molecular weight in terms of standard polymethyl methacrylate (PMMA).

The weight-average molecular weight $(Mw_B)$ of the methacrylic resin according to the present disclosure is not limited to any particular values, and is preferably 50,000 to 150,000. The lower limit value is more preferably 55,000, still more preferably 60,000, still more preferably 65,000, still more preferably 70,000, particularly preferably 75,000, and most preferably 80,000. The upper limit value is more preferably 120,000, and particularly preferably 100,000. When Mw is equal to or larger than the aforementioned lower limit value, the methacrylic resin according to the present disclosure tends to have excellent mechanical properties, and when it is equal to or smaller than the aforementioned upper limit value, the methacrylic resin according to the present disclosure tends to have excellent moldability.

The molecular weight distribution $(Mw/Mn)_B$ of the methacrylic resin according to the present disclosure is not limited to any particular values, and is preferably 1.5 to 2.5. The lower limit value is more preferably 1.8, and the upper limit value is more preferably 2.3. When $(Mw/Mn)_B$ is equal to or larger than the aforementioned lower limit value, the methacrylic resin according to the present disclosure tends to have excellent melt fluidity and excellent moldability, and when it is equal to or smaller than the aforementioned upper limit value, the methacrylic resin according to the present disclosure tends to have excellent mechanical properties such as excellent impact resistance and excellent toughness.

In the present disclosure, the copolymerization of the isopropenyl aromatic compound (I) is excellently controlled by adding an appropriate amount of at least one type of organic disulfide compound (D) to the polymerization raw material and/or the intermediate product and adjusting, when necessary, the condition for the polymerization. In this way, it is possible to stably manufacture a methacrylic resin in which the content of the isopropenyl aromatic compound unit (UI) in the methacrylic copolymer (A) contained in the methacrylic resin is uniform or nearly uniform, and variations in the unit composition of the methacrylic copolymer (A) is small.

The methacrylic resin according to the present disclosure satisfies the shown below Formula (1):

$$(Mw/Mn)_A/(Mw/Mn)_B \leq 1.40 \quad \cdot \quad \cdot \quad \cdot \quad (1)$$

The upper limit value of $(Mw/Mn)_A/(Mw/Mn)_B$ is preferably 1.35, more preferably 1.30, still more preferably 1.25, still more preferably 1.20, particularly preferably 1.15, and most preferably 1.10. The lower limit value is not limited to any particular values, and is, for example, 1.00.

In the methacrylic copolymer (A) contained in the methacrylic resin according to the present disclosure which satisfies the above-shown Formula (1), the content of the isopropenyl aromatic compound unit (UI), which is a structural unit that absorbs light having a wavelength of 254 nm, is uniform or nearly uniform irrespective of the molecular weight, and variations in the composition is small.

The glass transition temperature (Tg) of the methacrylic resin according to the present disclosure is not limited to any particular values, and is preferably 120°C of higher. The lower limit value is more preferably 123°C, particularly preferably 125°C, and most preferably 130°C. The upper limit value is not limited to any particular values, and is, for example 150°C. The higher the Tg is, the higher the heat resistance of the methacrylic resin according to the present disclosure becomes, and the more preferable it becomes. A molded article containing a methacrylic resin having a high Tg according to the present disclosure is preferred because it is less likely to cause deformation and/or shrinkage due to the heat.

In this specification, the "glass transition temperature (Tg)" can be measured in accordance with JIS K7121 by a method described in the [Example] section described later.

As described above, the methacrylic resin according to the present disclosure has excellent heat decomposition resistance. For the heat decomposition resistance, for example, a 1% thermal weight loss temperature measured by carrying out a thermogravimetric analysis (TGA) under an inert gas atmosphere can be used as its index. The 1% thermal weight loss temperature of the methacrylic resin according to the present disclosure can be, for example, 270°C or higher, 280°C or higher, 285°C or higher, or 290°C or higher. The upper limit value of the 1% thermal weight loss temperature is not limited to any particular values, and can be, for example, 320°C or 310°C.

The 1% thermal weight loss temperature can be measured by using a thermogravimetric apparatus, and is a temperature at which the weight loss rate becomes 1% based on the weight of 100% before the heating. For example, a TG curve is obtained by performing a thermogravimetric analysis (TGA) under the condition that the temperature is raised from a normal temperature (20 to 25°C) to 500°C at a temperature raising rate of 10°C/min under a nitrogen atmosphere, and the 1% thermal weight loss temperature can be determined from the obtained TG curve.

The methacrylic resin according to the present disclosure can have excellent rigidity. In the methacrylic resin according to the present disclosure, a test piece having a length of 80 mm, a width of 10 mm, and a thickness of 4 mm obtained by molding the methacrylic resin according to the present disclosure can have a flexural modulus of 3,000 MPa or higher, 3,100 MPa or higher, 3,200 MPa or higher, or 3,300 MPa or higher as measured in accordance with JIS K7171. The upper limit value of the flexural modulus is, for example, 4,000 MPa.

A molded article having a high flexural modulus has high rigidity even when its thickness is reduced, and the distortion and the like are suppressed. Therefore, the thickness of a molded article having a high flexural modulus can be reduced.

The methacrylic resin according to the present disclosure can have excellent heat resistance and excellent rigidity even when a load is imposed. A test piece having a length of 80 mm, a width of 10 mm, and a thickness of 4 mm obtained by molding the methacrylic resin according to the present disclosure can have a heat deflection temperature (HDT) of 105°C or higher, or 110°C or higher as measured in accordance with JIS K7191 after its condition is adjusted according to JIS K6712-2. The upper limit value of the HDT is, for example, 130°C or 125°C.

The methacrylic resin according to the present disclosure can have excellent surface hardness. In the methacrylic resin according to the present disclosure, Rockwell hardness of a square-shaped test piece having a length 50 mm on each side and a thickness of 3 mm obtained by molding the methacrylic resin according to the present disclosure can be 85 or higher, or 90 or higher as measured under the condition of M scale according to JIS K7202-2. The upper limit value is not limited to any particular values, and is, for example, 120. A molded article having high surface hardness has excellent abrasion resistance and hence is preferred.

The methacrylic resin according to the present disclosure can have excellent moldability. For the moldability, a melt flow rate (MFR) can be used as an index. In view of the stability of heating, melting, and molding, the MFR of the methacrylic resin according to the present disclosure is preferably 1 to 20 g/10 min. The lower limit value is more preferably 2 g/10 min, and particularly preferably 3 g/10 min. The upper limit value is more preferably 15 g/10 min, and particularly preferably 10 g/10 min.

In this specification, unless otherwise specified, the MFR of a methacrylic resin is a value measured by using a melt indexer at a temperature of 230°C under a load of 3.8 kg according to JIS K7210.

[Method for Manufacturing Methacrylic Resin]

A methacrylic resin according to the present disclosure can be manufactured by a known method.

An embodiment of the method for manufacturing a methacrylic resin according to the present disclosure includes:

a step (S1) of preparing a polymerization raw material containing 30 to 99 mass% of methyl methacrylate, 1 to 59 mass% of at least one type of isopropenyl aromatic compound (I), and 0 to 49 mass% of at least one type of other monomers (O) as raw material monomers, and further containing a polymerization initiator;
a step (S2) of polymerizing the polymerization raw material under a condition that a polymerization conversion rate is 30 to 60 mass%, and thereby obtaining a resin solution containing the methacrylic resin; and
a step (S3) of obtaining the methacrylic resin, of which the total remaining amount of the raw material monomers is preferably 0 to 1.00 mass%, by volatilizing and removing at least a part of the raw material monomers present in the resin solution in one step or over a plurality of steps.

(Step (S1))

A polymerization raw material containing the above-described plurality of types of raw material monomers and a polymerization initiator is prepared. The content of the MMA in the polymerization raw material is preferably 30 to 99 mass%, more preferably 45 to 95 mass%, and particularly preferably 50 to 87 mass%.

The content of the at least one type of isopropenyl aromatic compound (I) in the polymerization raw material is preferably 1 to 59 mass%, more preferably 5 to 40 mass%, and still more preferably 10 to 30 mass%.

The content of the at least one type of other monomers (O) in the polymerization raw material is preferably 0 to 49 mass%, more preferably 0 to 30 mass%, and particularly preferably 0 to 25 mass%.

As the polymerization initiator, at least one type of known radical polymerization initiator can be used. Specific examples include t-hexylperoxyisopropyl monocarbonate, t-hexylperoxy 2-ethylhexanoate, 1,1,3,3-tetramethylbutylperoxy 2-ethylhexanoate, t-butylperoxypivalate, t-hexylperoxypivalate, t-butylperoxyneodecanoate, t-hexylperoxyneodecanoate, 1,1,3,3-tetramethylbutylperoxyneodecanoate, 1,1-bis(t-hexylperoxy) cyclohexane, benzoyl peroxide, 3,5,5-trimethylhexanoyl peroxide, lauroyl peroxide, 2,2'-azobis (2-methylpropionitrile) (AIBN), 2,2'-azobis (2-methylbutyronitrile), and dimethyl 2,2'-azobis (2-methylpropionate). Among them, 2,2'-azobis (2-methylpropionitrile) (AIBN), t-hexylperoxy 2-ethylhexanoate, 1,1-bis(t-hexylperoxy) cyclohexane, and dimethyl 2,2'-azobis (2-methylpropionate) are preferred.

The polymerization raw material may contain at least one type of chain transfer agent as required. The chain transfer agent can be used for the purpose of adjusting the molecular weight or the like of methacrylic copolymer (A). Examples of chain transfer agents include alkyl mercaptans such as n-octylmercaptan (n-OM), n-dodecylmercaptan, t-dodecylmercaptan, 1,4-butanedithiol, 1,6-hexanedithiol, ethylene glycol bisthiopropionate, butanediolbisthioglycolate, butanediolbisthiopropionate, hexanediolbisthioglycolate, hexanediolbisthiopropionate, trimethylolpropane tris-(β-thiopropionate), and pentaerythritol tetrakisthiopropionate; and α-methylstyrene (αMSt) dimer; and terpinolene. Among them, monofunctional alkyl mercaptans such as n-octylmercaptan (n-OM) and n-dodecylmercaptan are preferred.

The amount of used chain transfer agent (the total amount in the case of a plurality of types, unless otherwise specified) is not limited to any particular values, and is preferably 0 to 1 mass parts based on the total of 100 mass parts of the plurality of types of raw material monomers. The upper limit value is more preferably 0.5 mass parts, particularly preferably 0.4 mass parts, and most preferably 0.3 mass parts.

The polymerization raw material can contain, when necessary, at least one type of additive other than those described above.

The polymerization raw material can be prepared by mixing a plurality of types of raw material monomers, at least one type of polymerization initiator, when necessary, at least one type of chain transfer agent, and when necessary, at least one type of additive under an inert gas atmosphere such as a nitrogen gas atmosphere or in the presence of oxygen. These materials may be mixed at once or in a divided manner, and the mixing procedure for the divided mixing is not limited to any particular procedures.

The content of water in the polymerization raw material is preferably 0 to 1,000 ppm. The upper limit value is more preferably 700 ppm, and particularly preferably 280 ppm. The polymerization raw material can be, when necessary, dehydrated by a known method.

The amount of dissolved oxygen in the polymerization raw material is preferably adjusted to 0 to 10 ppm by nitrogen purge or the like. The upper limit value of the amount of dissolved oxygen is more preferably 5 ppm, particularly preferably 4 ppm, and most preferably 3 ppm.

(Step (S2))

The polymerization can be carried out by a known method, and a bulk polymerization method is preferred. For example, the following continuous bulk polymerization method is preferred. That is, a resin solution containing a methacrylic resin is obtained by continuously supplying the polymerization raw material prepared in the step (S1) to a tank-type reactor, and performing bulk polymerization in the tank-type reactor under the condition that the polymerization conversion rate is 30 to 60%. Then, the obtained resin solution is continuously extracted from the tank-type reactor.

The polymerization is preferably carried out under an atmosphere of an inert gas such as a nitrogen gas.

The polymerization temperature is not limited to any particular temperatures, and is preferably 110 to 160°C, more preferably 120 to 155°C, and particularly preferably 130 to 150°C.

The average residence time in the tank-type reactor is not limited to any particular lengths, and is preferably 1.5 to 6 hours, more preferably 2 to 5.5 hours, and particularly preferably 2.5 to 5 hours.

The average concentration of the radical polymerization initiator present in the solution in the tank-type reactor is not limited to any particular values, and is preferably $1.0 \times 10^{-6}$ to $2.0 \times 10^{-5}$ mol/L.

The polymerization conversion rate is more preferably 35 to 58%, particularly preferably 35 to 55%, and most preferably 35 to 50%.

(Step (S3))

At least a part of the unreacted raw material monomers present in the resin solution is volatilized and removed in one step or over a plurality of steps. Examples of volatilization and removal methods include an adiabatic flash evaporation method, an equilibrium flash evaporation method, and a combination thereof, and the adiabatic flash evaporation method or the like is preferred.

The volatilization and removal of the unreacted raw material monomers present in the resin solution can be carried out by a known method using a heat exchanger, an extruder equipped with a vent, or a combination thereof, and the combination of a heat exchanger and an extruder equipped with a vent is preferred.

The heating temperature by the heat exchanger (also referred to as the set temperature of the heat exchanger or a heat exchanger temperature) is not limited to any particular temperatures, and is preferably 180 to 280°C. The lower limit value is more preferably 190°C, and particularly preferably, and most preferably 200°C. The upper limit value is more preferably 270°C, particularly preferably 260°C, and most preferably 250°C.

Examples of extruders include a single-screw extruder, a twin-screw extruder, and a multi-screw extruder. The extruder includes a resin input port through which a resin solution is charged, a cylinder with a built-in screw, and a die including a resin discharge port for discharging a methacrylic resin obtained after the step (S3), and can include an additive supply port as required. The number of vents included in the extruder equipped with the vent is at least one, and is preferably two or more. The molten resin temperature inside the die (also referred to as a die resin temperature) is not limited to any particular temperatures, and is preferably 230 to 260°C. The lower limit value is more preferably 235°C, and particularly preferably 240°C. The upper limit value is more preferably 255°C, and particularly preferably 250°C.

When the heating temperature by the heat exchanger and the molten resin temperature inside the die are within the above-described respective ranges, the thermal decomposition of the methacrylic copolymer (A) is suppressed, so that a methacrylic resin having excellent heat resistance and excellent heat decomposition resistance (thermal stability) can be manufactured. Further, it is possible to stably manufacture a methacrylic copolymer (A) of which the composition such as the content of the isopropenyl aromatic compound unit (UI) is uniform, and stably manufacture a methacrylic copolymer (A) having excellent heat resistance and excellent mechanical properties such as excellent rigidity and excellent surface hardness.

The unreacted raw material monomers removed from the resin solution may be collected and reused as raw material monomers.

In the method for manufacturing a methacrylic resin according to the present disclosure, it is preferred to add at least one type of organic disulfide compound (D) to at least one of the polymerization raw material, the resin solution obtained after the completion of the step (S2), and the resin solution for which the step (S3) is being performed.

It is preferred to add at least one type of organic disulfide compound (D) to at least the polymerization raw material among the polymerization raw material, the resin solution obtained after the completion of the step (S2), and the resin solution for which the step (S3) is being performed.

The amount of the at least one type of organic disulfide compound (D) added to the polymerization raw material is preferably 10 to 2,000 ppm. The lower limit value is more preferably 20 ppm, still more preferably 30 ppm, still more preferably 50 ppm, still more preferably 80 ppm, particularly preferably 100 ppm, and most preferably 200 ppm. The upper limit value is more preferably 1,500 ppm, particularly preferably 1,200 ppm, and most preferably 1,000 ppm.

In the method for manufacturing a methacrylic resin according to the present disclosure, when necessary, at least one type of organophosphorus compound (P) can be added to at least one of the polymerization raw material, the resin solution obtained after the completion of the step (S2), and the resin solution for which the step (S3) is being performed. The at least one type of organophosphorus compound (P) can be supplied, for example, from the additive supply port of the extruder.

In the method for manufacturing a methacrylic resin according to the present disclosure, when necessary, at least one type of lubricant (L) can be added to at least one of the polymerization raw material, the resin solution obtained after the completion of the step (S2), and the resin solution for which the step (S3) is being performed. The at least one type of lubricant (L) can be supplied, for example, from the additive supply port of the extruder.

The methacrylic resin according to the present disclosure obtained after the step (S3) can be processed into a form suitable as a molding material, such as in the form of pellets or a powder, by a known method.

As described above, according to the present disclosure, it is possible to provide a methacrylic resin having excellent heat resistance and excellent heat decomposition resistance (thermal stability), excellent mechanical properties such as excellent rigidity and excellent surface hardness, and excellent moldability, and to provide a method for manufacturing such a methacrylic resin.

[Methacrylic Resin Composition]

The methacrylic resin composition according to the present disclosure may contain the above-described methacrylic resin according to the present disclosure and at least one type of optional component.

The methacrylic resin composition according to the present disclosure may contain at least one type of other polymers. Examples of other polymers include methacrylic resins other than the above-described methacrylic resin according to the present disclosure; polyolefinic resins such as polyethylene, polypropylene, polybutene-1, poly-4-methylpentene-1, and polynorbornene; other styrene-based resins such as polystyrene, high-impact polystyrene, methyl methacrylate-styrene copolymer (MS resin), styrene-maleic anhydride copolymer (SMA resin), styrene-maleic anhydride-methyl methacrylate copolymer (SMM resin), acrylonitrile-styrene copolymer (AS resin), acrylonitrile-butadiene-styrene (ABS) resin, acrylonitrile-ethylenepropylene-diene styrene (AES) resin, acrylonitrile-styrene (AAS) resin, acrylonitrile-chlorinated ethylene-styrene (ACS) resin, and methacrylic butadiene styrene (MBS) resin; polyester-based resins such as polyethylene terephthalate and polybutylene terephthalate; polyamide-based resins such as nylon 6, nylon 66, and polyamide elastomer; polycarbonate-based resins; polyphenylene sulfide, polyether ether ketone, polysulfone, polyphenylene oxide, polyimide, polyether imide, polyvinyl chloride, polyvinylidene chloride, polyvinylidene fluoride, polyvinyl alcohol, ethylene-vinyl alcohol copolymer, polyacetal, ethylene-vinyl acetate copolymer, phenoxybased resins, and other thermoplastics such as ethylene-based ionomers; thermosetting resins such as phenolic resins, melaminebased resins, silicone-based resins, and epoxy-based resins; polyurethane and chlorinated polyurethane resins; modified polyphenylene ether; silicone-modified resins; acrylic rubber and silicone rubber; acrylic rubber and silicone rubber; acrylic thermoplastic elastomers such as diblock copolymers of methyl methacrylate polymer block-n-butyl acrylate polymer block and triblock copolymers; styrene-based thermoplastic elastomers such as SEPS, SEBS, and SIS; and olefinic rubbers such as IR, EPR, and EPDM.

The methacrylic resin composition according to the present disclosure may contain at least one type of optional additive.

The timing at which the additive to be contained in the methacrylic resin composition according to the present disclosure is added thereto may be during the manufacturing of the above-described methacrylic resin according to the present disclosure or after the manufacturing thereof.

[Molded Article]

A molded article according to the present disclosure can contain the above-described methacrylic resin according to the present disclosure or the above-described methacrylic resin composition according to the present disclosure.

The molding may be performed by a known molding method such as injection molding, compression molding, extrusion molding, and vacuum molding. Examples of molded articles include a planer article having a single-layer structure or a laminated structure, such as a film, a sheet, or a plate; and arbitrary three-dimensional structure or the like. The molded article may be a laminated body or a composite body including a layer or a member made of the methacrylic resin according to the present disclosure or the methacrylic resin composition according to the present disclosure, and a layer or a member made of other resins or various materials other than resins. In general, the terms "film", "sheet", or "plate" are used for a thin-film molded article depending on the thickness, but there are no clear definitions of them, and there is no clear distinction among them.

[Use]

The methacrylic resin according to the present disclosure can be used in arbitrary uses.

The methacrylic resin according to the present disclosure has excellent heat resistance and excellent heat decomposition resistance (thermal stability), and of which discoloration such as yellowing is suppressed, so it can be used in: optical members; members of electronic apparatuses such as mobile phones and personal computers; and components of transportation apparatuses such as vehicles (such as automobiles).

Examples of optical members include members for displays such as liquid crystal displays, plasma displays, organic electroluminescence (EL) displays, field emission displays, and rear projection television; and touch panel displays in which a touch panel and a display are combined with each other. Examples of optical members for displays include polarizer protection films, retardation plates (such as a 1/4 wavelength plate and a 1/2 wavelength plate), liquid crystal optical compensation films (such as a viewing angle control film), display front plates, display substrates, transparent conductive substrates for touch panels, light guide plates, and lenses (arrays).

In this specification, unless otherwise specified, the term "lens (array)" is a generic term for lenses and lens arrays.

Examples of other optical members include optical members of solar cells (such as transparent substrates, back films, and front films); optical members used in fields such as optical communication, optical exchange, and optical measurement (such as waveguides, lenses (arrays), optical fibers, coating materials for optical fibers); optical members of light-emitting elements such as light-emitting diodes (LEDs) (such as lenses and lens covers).

The methacrylic resin according to the present disclosure is also suitable for films such as surface protection films for electronic apparatuses such as mobile phones and personal computers, and marking films.

Examples of optical members for vehicles include rear lamp outer covers and optical members inside rear lamps; inner lenses for headlights (also referred to as projector lens or PES lens); front plates or molded articles for on-board meter panels and car navigation; door mirror housings, pillar covers (sash covers), license garnishes, front grills, fog garnishes, emblems, light guide rods; optical components for head-up displays such as optical cover members; optical members for DMS (Driver Monitoring System), OMS (Occupant Monitoring System), gesture control, and LiDAR (Light Detection And Ranging).

Examples of other members for transportation apparatuses other than those described above include aircraft windshields, pilot visors, motorcycle windshields, motor boat windshields, bus light shielding plates, automobile side visors, rear visors, head wings, headlight covers, automobile interior members, and automobile exterior members such as bumpers.

Examples of other uses of the methacrylic resin according to the present disclosure include interior components such as furniture, wallpaper, pendant lights, and mirrors; construction components such as doors, sashes, domes, safety window glass, partitions, stair baseboards, balcony baseboards, and roofs of leisure buildings; signboard components or marking films such as advertising towers, stand signboards, side signboards, transom signboards, and rooftop signboards; display components such as showcases, partition boards, and store displays; lighting components such as fluorescent lamp covers, mood lighting covers, lampshades, luminous ceilings, luminous walls, and chandeliers; other household appliances such as TV protective masks; audio and video nameplates, and stereo covers; vending machines; medical equipment components such as incubators and x-ray components; equipment components such as clock panels, machine covers, instrument covers, laboratory equipment, dial faces, and observation windows; traffic components such as road signboards, guide boards, curve mirrors, and soundproof walls; bathroom components such as bathtubs, and sanitary components; greenhouses, large water tanks, and box water tanks; stationery such as rulers and desk mats; game components, toys, and musical instruments; and decorative films and protective films provided on surfaces of face protection masks for welding.

**Examples**

Examples according to the present invention and comparative examples will be described hereinafter.

[Evaluation Item and Evaluation Method]

Evaluation items and evaluation methods are as follows.

(Polymerization Conversion Rate)

A polymerization conversion rate was determined by a gas chromatography analysis. INERTCAP1 (film thickness 0.4 $\mu$m, inner diameter 0.25 mm$\varphi$, length 60 m) manufactured by GL Sciences Inc. was connected, as a column, to "Gas Chromatograph GC-14A" manufactured by Shimadzu Corporation. Analyses were carried out under the shown below conditions, and polymerization conversion rates were calculated from obtained data.

> Injection Temperature: 250°C,
> Detector Temperature: 250°C,
> Temperature Profile: Held at 60°C for 5 minutes -> Temperature was raised to 250°C at a temperature raising rate of 10°C/min -> Held at 250°C for 10 minutes.

(Weight-Average Molecular Weight (Mw), Molecular Weight Distribution (Mw/Mn))

Weight-average molecular weights (Mw) and molecular weight distributions (Mw/Mn) of resins were determined by gel permeation chromatography (GPC) analyses. A GPC apparatus "HLC-8320" manufactured by Tosoh Corporation was used as a measuring apparatus. As a separation column, one obtained by connecting "TSK guard column Super HZ-H", "TSK gel HZM-M", and "TSK gel Super HZ 4000" manufactured by Tosoh Corporation in series was used. As the detector, two types of detectors, i.e., a differential refractive index detector (RI detector) and an absorbance detector having a detection wavelength of 254 nm (also referred to as a UV detector), were used.

A sample solution was prepared by dissolving 4 mg of a resin to be measured in 5 ml of tetrahydrofuran. The temperature of the column oven was set at 40°C. Tetrahydrofuran was used as an eluent, and an eluent flow rate was set to 0.35 ml/min. 20 $\mu$l of the sample solution was injected into the apparatus, and its chromatogram was measured. GPC measurements were performed for 10 pieces of standard polymethyl methacrylate (PMMA) of which the molecular weight was within the range of 400 to 5,000,000, and a calibration curve showing a relationship between retention times and molecular weights was created. The standard PMMA equivalent Mw and Mw/Mn of the resin to be measured were determined based on this calibration curve.

In Tables 1 and 2, $Mw_B$ is Mw determined by the GPC analysis using the differential refractive index detector; $(Mw/Mn)_A$ is a molecular weight distribution (Mw/Mn) determined by the GPC analysis using the absorbance detector having the detection wavelength of 254 nm; and $(Mw/Mn)_B$ is a molecular weight distribution (Mw/Mn) determined by the GPC analysis using the differential refractive index detector.

(Monomer Unit Composition of Methacrylic Resin)

For each monomer unit, $^1$H-NMR spectrum or $^{13}$C-NMR spectrum was measured, and its monomer unit composition of the methacrylic resin was obtained from a ratio of an integrated value of a peak originating from the monomer unit.

For the methyl methacrylate-$\alpha$-methylstyrene copolymer (MMA-$\alpha$MSt copolymer), $^1$H-NMR spectrum was measured, and a peak originating from protons of the methoxy group of the methyl methacrylate (MMA) unit and a peak originating from protons of the phenyl group of the $\alpha$-methylstyrene ($\alpha$MSt) unit were specified. Then, the monomer unit composition was obtained from a ratio of integrated values of these peaks.

For the methyl methacrylate-$\alpha$-methylstyrene-styrene copolymer (MMA-$\alpha$MSt-St copolymer), $^{13}$C-NMR spectrum was measured under the condition of a measurement mode: a decoupling method using a reversed gate, a peak originating from carbons of the carbonyl group of the methyl methacrylate (MMA) unit, a peak originating from carbons of the phenyl group of the $\alpha$-methylstyrene ($\alpha$MSt) unit, and a peak originating from carbons of the phenyl group of the styrene (St) unit were specified. Then, the monomer unit composition was obtained from a ratio of integrated values of these peaks.

(Remaining Amount of Each Monomer in Methacrylic Resin)

The remaining amount of each monomer in the methacrylic resin was determined from $^1$H-NMR spectrum or $^{13}$C-

NMR spectrum in a manner similar to that for the above-described evaluation of "Monomer Unit Composition of Methacrylic Resin".

(Remaining Amount of Organic Disulfide Compound (D) in Methacrylic Resin)

After dissolving 2 g of a methacrylic resin in 10 mL of dichloromethane, 30 mL of hexane was added and reprecipitated. A supernatant liquid obtained after this reprecipitation process was separated, and the solvent in the supernatant was removed by distillation under a reduced pressure and concentrated. The obtained concentrate was dissolved again in 1 mL of dichloromethane, and 4 mL of hexane was added and reprecipitated. 25 $\mu$L of a supernatant liquid obtained after this reprecipitation process was collected on a platinum board as a measurement sample. Then, after removing dichloromethane, a pyrolysis gas chromatography analysis was carried out.

"Agilent J & W Series DB-5 (inner diameter: 0.25 mm, film thickness: 0.25 $\mu$m, length: 30.0 m) manufactured by Agilent Technologies was connected, as a column, to "Gas Chromatograph GC-14A" manufactured by Shimadzu Corporation. Analyses were carried out under the shown below conditions. The remaining amount of the organic disulfide compound (D) was determined based on a calibration curve obtained from pyrolysis gas chromatography analyses of a plurality of standard solutions of the organic disulfide compound having different concentrations.

Vaporization Chamber Temperature: 260°C,
Column Oven Temperature: 100°C,
Temperature Profile: Temperature was raised to 320°C at a temperature raising rate 20°C/min -> Held at 320°C for 30 minutes.

(Glass Transition Temperature (Tg))

The glass transition temperature (Tg) of the resin to be measured was measured by using a differential scanning calorimeter ("DSC-50" manufactured by Shimadzu Corporation) according to JIS K7121. 10 mg of the resin to be measured was placed in an aluminum pan and set in the aforementioned apparatus. After nitrogen replacement was performed for 30 minutes or longer, the temperature was temporarily raised from a room temperature (20 to 25°C) to 250°C at a rate of 20°C/min in a nitrogen stream of 10 ml/min, held for 5 minutes, and cooled to the room temperature (first scanning). Next, the temperature was raised to 200°C at a rate of 10°C/min (second scanning), and a DSC curve was measured. An intermediate glass transition temperature determined from the DSC curve obtained in the second scanning was defined as a glass transition temperature (Tg).

(1% Thermal Weight Loss Temperature)

Using a thermogravimetry apparatus ("TGA-50" manufactured by Shimadzu Corporation), a TG curve was obtained by raising the temperature of about 5 mg of resin to be measured from a room temperature (20 to 25°C) to 500°C at a temperature raising rate of 10°C/min under a nitrogen atmosphere. A temperature at which the weight loss rate was 1% based on the pre-heating weight of 100% was determined as a 1% thermal weight loss temperature.

(Melt Flow Rate (MFR))

A melt flow rate (MFR) of a methacrylic resin was measured at 230°C under a load of 3.8 kg according to JIS K7210.

(Heat Deflection Temperature (HDT))

A test piece having a length of 80 mm, a width of 10 mm, and a thickness of 4 mm was obtained by injection-molding a methacrylic resin using an injection molding machine ("M-100C" manufactured by Meiki Co., Ltd.) at a cylinder temperature of 230°C, a mold temperature of 60°C, and an injection speed of 50 mm/sec. The condition of the obtained test piece was adjusted according to JIS K6712-2. The heat deflection temperature (HDT) of the test piece was measured in accordance with JIS K7191.

(Flexural Modulus)

A test piece was injection-molded and its condition was adjusted by a method similar to that for the above-described evaluation of the "Heat Deflection Temperature (HDT)". The flexural modulus of this test piece was measured in accordance with JIS K7171 by using a precision universal testing machine ("Autograph AG-IS5kN" manufactured by Shimadzu Corporation).

(Rockwell Hardness)

Two square-shaped test pieces each having a length of 50 mm on each side and a thickness of 3 mm were obtained by injection-molding a methacrylic resin using an injection molding machine ("M-100C" manufactured by Meiki Co., Ltd.) at a cylinder temperature of 230°C, a mold temperature of 60°C, and an injection speed of 50 mm/sec. The condition of each test piece was adjusted according to JIS K6712-2. These two test pieces were stacked on each other, so that the total thickness became 6 mm. Rockwell hardness of this sample was measured by using a Rockwell hardness tester (DXT-FA manufactured by Toyo Seiki Co., Ltd.) under the condition of M scale (test load = 980.7 N, diameter of steel ball indenter = 6.35 mm) according to JIS K7202-2.

[Additive]

The used additives were as follows.

[Organic Disulfide Compound (D)]
(DDS) di-tert-dodecyl disulfide,
(DBS) dibenzyl disulfide.

[Example E1]

65 mass parts of purified methyl methacrylate (MMA), 28 mass parts of α-methylstyrene (αMSt), 7 mass parts of styrene (St), 100 ppm of n-octylmercaptan (n-OM) as a chain transfer agent, and 1,000 ppm of di-tert-dodecyl disulfide (DDS) were charged into an autoclave equipped with a stirrer and a collection tube, and uniformly mixed. A polymerization raw material was obtained by adding 500 ppm of 2,2'-azobis (2-methylpropionitrile) (AIBN) to this mixture as a polymerization initiator, and uniformly mixing the mixture. A nitrogen gas was blown into this polymerization raw material, and the dissolved oxygen concentration was thereby adjusted to 3 ppm. The composition of this polymerization raw material is also referred to as a preparation composition.

Next, a continuous flow tank-type reactor equipped with a brine chiller condenser was prepared, and the inside of this reactor was replaced with nitrogen gas. The above-described polymerization raw material was continuously fed into this reactor at a constant flow rate so that the average residence time became 3.0 hours. Then, bulk polymerization was carried out at a polymerization temperature of 140°C, and a resin solution containing a methacrylic resin, which was the reaction product, was continuously discharged from the reactor. Note that the pressure inside the reactor was controlled by a pressure control valve connected to the brine chiller condenser. The polymerization conversion rate was 37%.

A twin-screw extruder including a resin input port through which the above-described resin solution discharged from the reactor is charged, a die including a resin discharge port for discharging a manufactured resin, a first vent (also referred to as a rear vent) located relatively close to the resin input port, a second vent (also referred to as a front vent) located relatively close to the resin discharge port, and an additive supply port located between the second vent (front vent) and the resin discharge port was prepared.

The above-described resin solution discharged from the reactor was heated by using a heat exchanger and supplied to the above-described extruder through the resin supply port. The set temperature of the heat exchanger was adjusted to 200°C, and the set temperature of the cylinder of the extruder was adjusted to 245°C. From the resin solution supplied into the cylinder of the extruder, volatile components consisting mainly of unreacted monomers were flash-evaporated and discharged through the first vent (rear vent). Further, the resin was conveyed in the axial direction of the cylinder by a screw, and the volatile components evaporated during the conveyance were discharged through the second vent (front vent). The screw speed was set at 164 rpm. The resin was extruded, from the resin discharge port of the extruder, into strands. The molten resin temperature (also referred to as a die resin temperature) inside the die was 244°C. Pellets of the methacrylic resin containing the methacrylic copolymer (A-1) containing the methyl methacrylate (MMA) unit and the α-methylstyrene (αMSt) unit were obtained by cutting the obtained strands by using a pelletizer

Table 1 shows the main manufacturing conditions and evaluation results. In Tables 1 and 2, conditions that are not shown in the tables are the same as each other. In the tables, "Raw Material Composition" is a composition obtained by combining the preparation composition and the additive(s) added thereafter. In the tables, the amounts of the polymerization initiator, the chain transfer agent, and the organic disulfide compound (D), which was added before the polymerization, in the raw material composition are amounts based on the total amount of 100 mass% of the raw material monomers.

[Examples E2-E8, Comparative Examples EC2-EC7]

For each of examples and comparative examples, a methacrylic resin containing one of methacrylic copolymers (A-2) to (A-8) and (C-2) to (C-7) each containing the methyl methacrylate (MMA) unit and the α-methylstyrene (αMSt) unit was obtained by a method similar to that for Example E1, except that the preparation composition and/or the polymerization conditions were changed. Tables 1 and 2 show the main manufacturing conditions and evaluation results.

[Comparative Example EC1]

A methacrylic resin containing 98.0 mass% or more of a methacrylic copolymer (C-1) containing the methyl methacrylate (MMA) unit and the α-methylstyrene (αMSt) unit was obtained by a method similar to that for Example E1, except that DDS was added later as described hereinafter.

Di-tert-dodecyl disulfide (DDS) was charged in an additive preparation tank, and oxygen and water were removed by repeating a pressure operation in which the pressure was increased to 0.2 MPa and then decreased to the atmospheric pressure four times in total, and by doing so, the oxygen concentration in the additive preparation tank was reduced to 0%. Next, the DDS charged into the additive preparation tank was melted by heating it to a temperature higher than its melting point and stirring it for 2 hours. The obtained liquid DDS was filtered by using a metal filter ("FLHF 200-10M3F" manufactured by PALL) having a mesh opening of 0.2 μm, and injected into the extruder through the additive input port by using a metering pump.

The amount of added DDS based on 100 mass% of the resin was 1,000 ppm.

Table 2 shows the main manufacturing conditions and evaluation results. In the table, the amount of DDS added in the raw material composition after the polymerization is an amount based on 100 mass% of the resin.

[Table 1]

| Example | | | | E1 | E2 | E3 | E4 | E5 | E6 | E7 | E8 |
|---|---|---|---|---|---|---|---|---|---|---|---|
| Raw material composition | | | | | | | | | | | |
| Monomer | MMA | mass% | | 65 | 65 | 65 | 65 | 65 | 85 | 65 | 78 |
| | αMSt | mass% | | 28 | 28 | 28 | 28 | 28 | 15 | 28 | 17 |
| | St | mass% | | 7 | 7 | 7 | 7 | 7 | | 7 | 5 |
| Initiator | AIBN | ppm | | 500 | 500 | 500 | 500 | 500 | 500 | 500 | 400 |
| Chain transfer agent | n-OM | ppm | | 100 | 100 | 100 | 100 | 100 | 400 | 100 | 530 |
| Organic disulfide compound (D) | DDS (added before polymerization) | ppm | | 1000 | 1000 | 800 | 300 | 20 | 1000 | 1000 | |
| | DBS (added before polymerization) | ppm | | | | | | | | | 1000 |
| | DDS (added after polymerization) | ppm | | | | | | | | | |
| Polymerization condition | Polymerization temperature | °C | | 140 | 140 | 140 | 140 | 140 | 120 | 140 | 140 |
| | Average residence time | hr | | 3.0 | 3.0 | 3.0 | 3.0 | 3.0 | 3.3 | 3.0 | 2.5 |
| | Heat exchanger temperature | °C | | 200 | 230 | 200 | 200 | 200 | 200 | 230 | 210 |
| | Screw speed | rpm | | 164 | 164 | 184 | 164 | 164 | 144 | 184 | 156 |
| | Cylinder temperature | °C | | 245 | 245 | 245 | 245 | 245 | 255 | 245 | 245 |
| | Die resin temperature | °C | | 244 | 245 | 248 | 244 | 244 | 256 | 248 | 242 |
| Polymerization conversion rate | | % | | 37 | 37 | 37 | 37 | 37 | 31 | 37 | 39 |
| Resin | | | | | | | | | | | |
| Methacrylic Copolymer (A) | | | | A-1 | A-2 | A-3 | A-4 | A-5 | A-6 | A-7 | A-8 |

(continued)

| Resin | | | | | | | | | | | |
|---|---|---|---|---|---|---|---|---|---|---|---|
| Unit composition of copolymer | MMA | mass% | 77 | 77 | 77 | 77 | 77 | 91 | 77 | 85 |
| | αMSt | mass% | 16 | 16 | 16 | 16 | 16 | 9 | 16 | 10 |
| | St | mass% | 8 | 8 | 8 | 7 | 7 | | 8 | 5 |
| Remaining amount of raw monomer | MMA | mass% | 0.05 | 0.01 | 0.03 | 0.09 | 0.12 | 0.03 | 0.03 | 0.04 |
| | αMSt | mass% | 0.34 | 0.27 | 0.26 | 0.36 | 0.37 | 0.26 | 0.25 | 0.13 |
| | St | mass% | 0.00 | 0.00 | 0.00 | 0.00 | 0.00 | 0.00 | 0.00 | 0.01 |
| | Total amount | mass% | 0.39 | 0.28 | 0.29 | 0.45 | 0.49 | 0.29 | 0.28 | 0.18 |
| Amount of organic disulfide compound (D) in resin | | ppm | 670 | 640 | 600 | 340 | 0 | 360 | 630 | 120 |
| Resin physical property evaluation result | | | | | | | | | | |
| MwB | | | 87400 | 83400 | 87700 | 87000 | 86500 | 105030 | 83200 | 92000 |
| (Mw/Mn)B | | | 2.0 | 2.4 | 2.0 | 1.9 | 2.0 | 2.0 | 2.4 | 2.0 |
| (Mw/Mn)A/(Mw/Mn)B | | | 1.02 | 1.19 | 1.08 | 1.04 | 1.09 | 1.19 | 1.37 | 1.18 |
| Tg | | °C | 126 | 122 | 124 | 123 | 120 | 129 | 121 | 121 |
| 1% weight loss temperature | | °C | 301 | 296 | 295 | 296 | 292 | 297 | 300 | 275 |
| MFR | | g/10min | 6.0 | 9.1 | 5.7 | 6.2 | 7.0 | 1.4 | 8.9 | 6.5 |
| HDT | | °C | 112 | 108 | 112 | 114 | 111 | 112.2 | 105 | 108 |
| Flexural modulus | | MPa | 3430 | 3300 | 3400 | 3550 | 3400 | 3450 | 3200 | 3100 |
| Rockwell hardness | | HRM | 94 | 91 | 93 | 94 | 92 | 97.2 | 90 | 87 |

[Table 2]

| Comparative Example | | | | | EC1 | EC2 | EC3 | EC4 | EC5 | EC6 | EC7 |
|---|---|---|---|---|---|---|---|---|---|---|---|
| Raw material composition | | | | | | | | | | | |
| | Monomer | MMA | mass% | | 65 | 5 | 65 | 74 | 65 | 65 | 78 |
| | | αMSt | mass% | | 28 | 60 | 28 | 20 | 28 | 28 | 17 |
| | | St | mass% | | 7 | 35 | 7 | 6 | 7 | 7 | 5 |
| | Initiator | AIBN | ppm | | 500 | 1000 | 500 | 400 | 500 | 500 | 400 |
| | Chain transfer agent | n-OM | ppm | | 100 | 500 | 100 | 530 | 100 | 100 | 530 |
| | Organic disulfide compound (D) | DDS (added before polymerization) | ppm | | | 1000 | | | 1000 | 1000 | 1000 |
| | | DBS (added before polymerization) | ppm | | | | | | | | |
| | | DDS (added after polymerization) | ppm | | 1000 | | | | | | |
| | Polymerization condition | Polymerization temperature | °C | | 140 | 130 | 140 | 140 | 140 | 140 | 140 |
| | | Average residence time | hr | | 3.0 | 2.5 | 3.0 | 2.5 | 3.0 | 3.0 | 2.5 |
| | | Heat exchanger temperature | °C | | 200 | 230 | 200 | 230 | 255 | 230 | 210 |
| | | Screw speed | rpm | | 164 | 144 | 164 | 156 | 164 | 236 | 156 |
| | | Cylinder temperature | °C | | 245 | 230 | 245 | 245 | 245 | 250 | 270 |
| | | Die resin temperature | °C | | 243 | 228 | 244 | 241 | 243 | 263 | 268 |
| Polymerization conversion rate | | | % | | 37 | 31 | 36 | 39 | 37 | 37 | 39 |
| Resin | | | | | | | | | | | |
| Methacrylic Copolymer (C) | | | | | C1 | C2 | C3 | C4 | C5 | C6 | C7 |
| | Unit composition of copolymer | MMA | mass% | | 77 | 10 | 77 | 82 | 76 | 77 | 85 |
| | | αMSt | mass% | | 16 | 45 | 15 | 11 | 16 | 16 | 10 |
| | | St | mass % | | 8 | 45 | 8 | 7 | 9 | 8 | 5 |
| | Remaining amount of raw monomer | MMA | mass% | | 1.30 | 0.00 | 1.44 | 0.74 | 0.00 | 0.06 | 0.02 |
| | | αMSt | mass% | | 0.35 | 0.90 | 0.35 | 0.25 | 0.21 | 0.28 | 0.12 |
| | | St | mass% | | 0.17 | 0.11 | 0.18 | 0.15 | 0.00 | 0.00 | 0.00 |
| | | Total amount | mass% | | 1.82 | 1.01 | 1.97 | 1.14 | 0.21 | 0.34 | 0.14 |
| | Amount of organic disulfide compound (D) in resin | | ppm | | 970 | 10 | 0 | 0 | 760 | 740 | 850 |
| Resin physical property evaluation result | | | | | | | | | | | |
| | MwB | | - | | 87000 | 55000 | 87200 | 95000 | 81200 | 86000 | 91000 |
| | (Mw/Mn)B | | - | | 2.0 | 2.0 | 2.0 | 2.1 | 2.8 | 2.4 | 2.0 |
| | (Mw/Mn)A/(Mw/Mn)B | | - | | 1.09 | 2.50 | 1.09 | 1.21 | 1.46 | 1.85 | 1.72 |

(continued)

| Resin physical property evaluation result | | | | | | | | |
|---|---|---|---|---|---|---|---|---|
| Tg | °C | 118 | 100 | 117 | 112 | 119 | 118 | 115 |
| 1% weight loss temperature | °C | 270 | 220 | 242 | 259 | 292 | 297 | 293 |
| MFR | g/10min | 15.6 | 5.2 | 15.0 | 10.0 | 13.1 | 8.2 | 8.5 |
| HDT | °C | 95 | 73 | 96 | 99 | 104 | 98 | 104 |
| Flexural modulus | MPa | 3000 | 2900 | 3050 | 3100 | 3100 | 3000 | 2900 |
| Rockwell hardness | HRM | 85 | 81 | 87 | 89 | 88 | 86 | 83 |

[Summary of Results]

In each of Examples E1 to E8, a methacrylic resin containing a methacrylic copolymer (A) composed of 40 to 99 mass% of methyl methacrylate (MMA) unit, 1 to 40 mass% of at least one type of isopropenyl aromatic compound unit (UI), and 0 to 30 mass% of at least one type of other units (UO) was obtained by adding an appropriate amount of an organic disulfide compound (D) to the polymerization raw material, and performing polymerization under suitable conditions.

In each of Examples E1 to E4 and E6 to E8, a methacrylic resin containing 1 to 1,000 ppm of an organic disulfide compound (D) was finally-obtained by adding an appropriate amount of an organic disulfide compound (D) to the polymerization raw material.

In all of the methacrylic resins obtained in these examples, the total remaining amount of the raw material monomers was 0 to 1.00 mass%. In each of all of these Examples, it was possible to stably manufacture a methacrylic copolymer (A) of which $(Mw/Mn)_A/(Mw/Mn)_B$ was 1.40 or lower, and the composition such as the content of the isopropenyl aromatic compound unit (UI) was uniform.

In all of the methacrylic resins obtained in Examples E1 to E8, Tg was 120°C or higher; 1% thermal weight loss temperature was 270°C or higher; and heat resistance and heat decomposition resistance (thermal stability) were excellent. In all of the methacrylic resins obtained in these Examples, the melt flow rate (MFR) was excellent and moldability was excellent. In all of the methacrylic resins obtained in these Examples, the heat deflection temperature (HDT) was 105°C or higher, and heat resistance and rigidity under a load were excellent. In all of the methacrylic resins obtained in these Examples, flexural modulus and surface hardness were excellent. All of the methacrylic resins obtained in these Examples were suitable for optical members; and members for vehicles such as automobiles.

In each of Comparative Examples EC1, EC3, and EC4, a methacrylic resin containing a methacrylic copolymer (C) consisting of 40 to 99 mass% of methyl methacrylate (MMA) unit, 1 to 40 mass% of isopropenyl aromatic compound unit (UI), and 0 to 30 mass% of other unit (UO) was obtained. In these comparative examples, no organic disulfide compound (D) was added to the polymerization raw material. In all of the methacrylic resins obtained in these comparative examples, the total remaining amount of the raw material monomers of the methacrylic copolymer (C) was more than 1.00 mass%.

In all of the methacrylic resins obtained in these comparative examples, $(Mw/Mn)_A/(Mw/Mn)_B$ was lower than 1.40. However, heat resistance and/or heat decomposition resistance (thermal stability) were poor, and at least one of the Tg, the 1% thermal weight loss temperature, the heat deflection temperature (HDT), and the stability during the heated retention was poor.

In Comparative Example EC2, a methacrylic resin containing a methacrylic copolymer (C) containing methyl methacrylate (MMA) unit and isopropenyl aromatic compound units (UI), and of which the content of methyl methacrylate (MMA) unit was less than 40 mass%, and the content of the isopropenyl aromatic compound unit (UI) was more than 40 mass% was obtained.

In this comparative example, a methacrylic resin containing 1 to 1,000 ppm of an organic disulfide compound (D) was finally-obtained by adding an appropriate amount of an organic disulfide compound (D) to the polymerization raw material.

In the methacrylic resin obtained in this comparative example, the total remaining amount of the raw material monomers of the methacrylic copolymer (C) was more than 1.00 mass%.

In this comparative example, $(Mw/Mn)_A/(Mw/Mn)_B$ was higher than 1.40, and it was not possible to stably manufacture a methacrylic copolymer (C) of which the composition such as the content of the isopropenyl aromatic compound unit (UI) was uniform. Further, heat resistance and/or heat decomposition resistance (thermal stability) were poor. Further, Tg, 1% thermal weight loss temperature, and heat deflection temperature (HDT) were poor. Further, flexural modulus and surface hardness were poor.

In each of Comparative Examples EC5 to EC7, a methacrylic resin containing a methacrylic copolymer (C) consisting of 40 to 99 mass% of methyl methacrylate (MMA) unit, 1 to 40 mass% of isopropenyl aromatic compound unit (UI), and 0 to 30 mass% of other unit (UO) was obtained.

In these comparative examples, a methacrylic resin containing 1 to 1,000 ppm of an organic disulfide compound (D) was finally-obtained by adding an appropriate amount of an organic disulfide compound (D) to the polymerization raw material.

In all of the methacrylic resins obtained in these comparative examples, the total remaining amount of the raw material monomers of the methacrylic copolymer (C) was 0 to 1.00 mass%.

In these comparative examples, since the polymerization conditions were inappropriate, $(Mw/Mn)_A/(Mw/Mn)_B$ was higher than 1.40, and it was not possible to stably manufacture a methacrylic copolymer (C) of which the composition such as the content of isopropenyl aromatic compound unit (UI) was uniform. Further, heat resistance and/or heat decomposition resistance (thermal stability) were poor, and Tg and heat deflection temperature (HDT) were poor. The flexural modulus and surface hardness of the methacrylic resin obtained in Comparative Example EC7 were poor.

The present invention is not limited to the above-described embodiments and examples, and they can be modified as appropriate without departing from the scope and spirit of the invention.

This application is based upon and claims the benefit of priority from Japanese patent application No. 2023-100539, filed on June 20, 2023, the disclosure of which is incorporated herein in its entirety by reference.

**Claims**

1. A methacrylic resin containing a methacrylic copolymer (A) consisting of 40 to 99 mass% of a methyl methacrylate unit, 1 to 40 mass% of at least one type of isopropenyl aromatic compound unit (UI), and 0 to 30 mass% of at least one type of other unit (UO), wherein
   a glass transition temperature is 120°C or higher, and the methacrylic resin satisfies shown below Formula (1),

$$(Mw/Mn)_A/(Mw/Mn)_B \leq 1.40 \quad \cdot \quad \cdot \quad \cdot \quad (1)$$

   (in the above-shown formula, $(Mw/Mn)_A$ is a molecular weight distribution (Mw/Mn) determined by a gel permeation chromatography analysis using an absorbance detector having a detection wavelength of 254 nm, and $(Mw/Mn)_B$ is a molecular weight distribution (Mw/Mn) determined by a gel permeation chromatography analysis using a differential refractive index detector).

2. The methacrylic resin according to claim 1, wherein a total remaining amount of raw material monomers of the methacrylic copolymer (A) is 0 to 1.00 mass %.

3. The methacrylic resin according to claim 1, wherein the at least one type of isopropenyl aromatic compound unit (UI) includes an α-methylstyrene unit.

4. The methacrylic resin according to claim 1, wherein the methacrylic copolymer (A) contains an aromatic vinyl compound unit other than the isopropenyl aromatic compound unit as the other unit (UO).

5. The methacrylic resin according to claim 1, further containing 1 to 1,000 ppm of at least one type of organic disulfide compound (D).

6. The methacrylic resin according to claim 5, wherein the at least one type of organic disulfide compound (D) includes at least one type selected from the group consisting of di-tert-dodecyl disulfide (DDS) and dibenzyl disulfide (DBS).

7. The methacrylic resin according to claim 1, wherein a flexural modulus of a test piece having a length of 80 mm, a width of 10 mm, and a thickness of 4 mm obtained by molding the methacrylic resin is 3,000 MPa or higher as measured in accordance with JIS K7171.

8. The methacrylic resin according to claim 1, wherein Rockwell hardness of a square-shaped test piece having a length 50 mm on each side and a thickness of 3 mm obtained by molding the methacrylic resin is 85 or higher as measured under the condition of M scale according to JIS K7202-2.

9. A methacrylic resin composition containing a methacrylic resin according to any one of claims 1 to 8.

**10.** A molded article containing a methacrylic resin according to any one of claims 1 to 8.

**11.** A method for manufacturing a methacrylic resin according to any one of claims 1 to 8, comprising:

a step (S1) of preparing a polymerization raw material containing 30 to 99 mass% of methyl methacrylate, 1 to 59 mass% of at least one type of isopropenyl aromatic compound (I), and 0 to 49 mass% of at least one type of other monomers (O) as raw material monomers, and further containing a polymerization initiator;

a step (S2) of polymerizing the polymerization raw material under a condition that a polymerization conversion rate is 30 to 60 mass%, and thereby obtaining a resin solution containing the methacrylic resin; and

a step (S3) of obtaining the methacrylic resin by volatilizing and removing at least a part of the raw material monomers present in the resin solution in one step or over a plurality of steps, wherein 10 to 2,000 ppm of at least one type of organic disulfide compound (D) is added to at least one of the polymerization raw material, the resin solution obtained after completion of the step (S2), and the resin solution for which the step (S3) is being performed.

**12.** The method for manufacturing the methacrylic resin according to claim 11, wherein at least one type of organic disulfide compound (D) is added to at least the polymerization raw material among the polymerization raw material, the resin solution obtained after completion of the step (S2), and the resin solution for which the step (S3) is being performed.

**13.** The method for manufacturing the methacrylic resin according to claim 11, wherein the step (S3) includes a step of heating the resin solution to 190 to 250°C and thereby volatilizing raw material monomers present in the resin solution.

**14.** The method for manufacturing the methacrylic resin according to claim 11, wherein

the step (S3) includes a step of charging the resin solution into an extruder including at least one vent, volatilizing raw material monomers present in the resin solution and thereby discharging the raw material monomers through the vent, and extruding the methacrylic resin from a die of the extruder, and

a temperature of a molten resin inside the die is 230 to 260°C.

**EP 4 733 334 A1**

## INTERNATIONAL SEARCH REPORT

International application No.

**PCT/JP2024/021635**

### A. CLASSIFICATION OF SUBJECT MATTER

*C08F 220/18*(2006.01)i; *C08F 212/08*(2006.01)i; *C08K 5/372*(2006.01)i; *C08L 33/12*(2006.01)i
FI: C08F220/18; C08F212/08; C08K5/372; C08L33/12

According to International Patent Classification (IPC) or to both national classification and IPC

### B. FIELDS SEARCHED

Minimum documentation searched (classification system followed by classification symbols)

C08F220/18; C08F212/08; C08K5/372; C08L33/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2022/196827 A1 (KURARAY CO., LTD.) 22 September 2022 (2022-09-22) claims, table 1, examples 1, 3-5, comparative example 1 | 1-4, 7-10 |
| A | | 5-6, 11-14 |
| A | JP 2002-348309 A (MITSUBISHI RAYON CO., LTD.) 04 December 2002 (2002-12-04) entire text | 1-14 |
| P, A | WO 2024/071052 A1 (KURARAY CO., LTD.) 04 April 2024 (2024-04-04) claims, paragraphs [0135]-[0138], production example 4 | 1-14 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/021635**

| Patent document cited in search report | | | Publication date (day/month/year) | Patent family member(s) | | | Publication date (day/month/year) |
|---|---|---|---|---|---|---|---|
| WO | 2022/196827 | A1 | 22 September 2022 | EP | 4310113 | A1 | |
| | | | | claims, examples 1, 3-5 | | | |
| | | | | CN | 117321097 | A | |
| JP | 2002-348309 | A | 04 December 2002 | (Family: none) | | | |
| WO | 2024/071052 | A1 | 04 April 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4218515 A
- JP H4328111 A
- WO 2021117903 A
- WO 2022196827 A
- JP 2023100539 A